# EUROPÄISCHE PATENTSCHRIFT

(11) **EP 4 118 488 B1**
(45) Veröffentlichungstag und Bekanntmachung des Hinweises auf die Patenterteilung: **29.04.2026**
(21) Anmeldenummer: 21711507.0
(22) Anmeldetag: 09.03.2021
(51) Int. Cl.: G03B 35/06, H04N 13/211, G06T 7/70, G06T 7/55, G06T 7/593

(54) **VERFAHREN ZUM ERMITTELN EINER OBJEKT-INFORMATION ZU EINEM OBJEKT IN EINER FAHRZEUGUMGEBUNG, STEUEREINHEIT UND FAHRZEUG**
METHOD FOR DETERMINING OBJECT INFORMATION RELATING TO AN OBJECT IN A VEHICLE ENVIRONMENT, CONTROL UNIT AND VEHICLE
PROCÉDÉ DE DÉTERMINATION D'INFORMATIONS D'OBJET RELATIVES À UN OBJET DANS UN ENVIRONNEMENT DE VÉHICULE, UNITÉ DE COMMANDE ET VÉHICULE

(30) Priorität: 09.03.2020 DE 102020106301
(43) Veröffentlichungstag der Anmeldung: 18.01.2023
(73) Patentinhaber: ZF CV Systems Global GmbH, 3006 Bern (CH)
(72) Erfinder: DIECKMANN, Thomas, 30982 Pattensen (DE); KLINGER, Tobias, 31832 Springe (DE); RICKE, Janik, 31311 Uetze (DE)
(74) Vertreter: Schäferjohann, Volker
(86) Internationale Anmeldenummer: PCT/EP2021/055826
(87) Internationale Veröffentlichungsnummer: WO 2021/180669

(56) Entgegenhaltungen:
- US-A1- 2017 116 758
- US-A1- 2019 056 749

## Beschreibung

Verfahren zum Ermitteln einer Objekt-Information zu einem Objekt in einer Fahrzeugumgebung, Steuereinheit und Fahrzeug.

Die Erfindung betrifft ein Verfahren zum Ermitteln einer Objekt-Information eines Objektes in einer Umgebung eines Fahrzeuges sowie eine Steuereinheit und ein Fahrzeug zur Durchführung der Verfahren.

Aus dem Stand der Technik ist bekannt, wie mithilfe einer einzelnen Kamera durch die Vorwärts- oder Rückwärtsbewegung eines Fahrzeugs, an dem die Kamera montiert ist, anhand photogrammetrischer Methoden die Struktur der Szene in 3D bestimmt werden kann (sog. Structure from Motion (SfM)). Ferner ist aus dem Stand der Technik bekannt, dass die Bestimmung der Basislinie zwischen zwei Standpunkten der Kamera, die für die Triangulation zur Tiefenbestimmung entweder bekannt oder zu schätzen ist, durch Auswertung von Odometrie-Daten des Fahrzeuges unterstützt werden kann.

In US2018/0204072A1 ist weiterhin vorgesehen, Kameras an einem Anhänger eines Fahrzeug-Gespanns zu fixieren. Weiterhin sind Fahrdynamik-Sensoren vorgesehen, die Odometrie-Daten, die die Fahrzeugbewegung betreffen, ausgeben, beispielsweise eine Fahrzeuggeschwindigkeit. Die von der Kamera ausgegebenen Kamera-Daten werden mit den Odometrie-Daten abgeglichen, wobei die Odometrie-Daten für die Kompensation der Fahrzeugbewegung beim Verarbeiten der Kamera-Daten zum Erstellen von Bildern genutzt werden. Dabei können auch Kamera-Daten unterschiedlicher Kameras zusammengefügt werden.

In DE 10 2005 009 814 B4 ist vorgesehen, Kamera-Daten zusammen mit Odometrie-Daten, die von Raddrehzahlsensoren ausgegeben werden, zu verarbeiten, um eine Gierrate zu ermitteln. In DE 60 009 000 T2 ist weiterhin eine Bildverarbeitung unter Berücksichtigung von Odometrie-Daten des Fahrzeuges vorgesehen, um den Fahrer beim Einparken zu unterstützen. In DE 10 2015 105 248 A1 wird ein Bild von einer ersten Kamera zusammen mit einem Bild von einer zweiten Kamera in Verbindung mit Odometrie-Daten verarbeitet, wobei die Kameras an einem Anhänger und einem Zugfahrzeug eines mehrteiligen Fahrzeugs angeordnet sein können. Die Bilder, die die verschiedenen Kameras aufgenommen und in Form von Kamera-Daten ausgegeben haben, werden zusammengesetzt. Daraus wird ein kombiniertes Bild der Umgebung erzeugt, wobei in der Kurvenfahrt beispielsweise auch ein Knickwinkel berücksichtigt wird, der die Standpunkte der Kameras zueinander charakterisiert. Eine Vogelperspektive kann über das komplette mehrteilige Fahrzeug gelegt werden, um die Umgebung um das Fahrzeug anzuzeigen, um beispielsweise eine Einparkhilfe zu ermöglichen.

In WO 2016/164118 ist eine omnidirektionale Kamera vorgesehen, die Objekt-Punkte von Objekten in einer Umgebung des Fahrzeuges erfasst und in Abhängigkeit davon Kamera-Daten ausgibt. Mithilfe einer Steuereinrichtung im Fahrzeug werden die Kamera-Daten unter Einbezug aufgenommener Odometrie-Daten verarbeitet, wobei die Odometrie-Daten, z.B. von Raddrehzahl-Sensoren, Positions-Sensoren oder einem Lenkwinkel-Sensor, über den Datenbus des Fahrzeuges empfangen werden. Die Objekt-Punkte in der Umgebung des Fahrzeuges, die von Interesse sind, werden von der Kamera erkannt und anhand der Odometrie-Daten wird durch die Steuereinrichtung ein Abstand zu dem dem erfassten Objekt-Punkt zugeordneten Objekt ermittelt. Dafür werden über die eine Kamera eine Mehrzahl von Bildern aufgenommen, wobei die Bilder aus verschiedenen Standpunkten mit überlappenden Sichtfeldern aufgenommen sind. Durch das Verfolgen von Objektpunkten kann mittels Triangulation und Bündelausgleichung eine Tiefeninformation der Szene geschätzt werden. Die Kamera-Daten werden außerdem in Form von Bildern auf einem Display für den Fahrer dargestellt. Die Bilder sowie der ermittelte Abstand dienen dazu, das Rangieren eines PKW als Zugfahrzeug an einen Anhänger zu erleichtern, um diesen anzukuppeln.

Weitere Objekte wie der Boden, Fußgänger, etc. können zwar erkannt werden, allerdings setzt dies eine ausreichende Bewegung des Fahrzeugs voraus, da nur auf diese Weise unterschiedliche Standpunkte für die Kamera eingestellt werden können.

Aus US2017116758A1 ist eine Vorrichtung zur Entfernungsmessung mit einer Kamera bekannt, welche beweglich auf einem Kameraträger angeordnet ist, mit einer Steuereinrichtung, welche ausgebildet ist, eine Bewegung der Kamera, insbesondere im stationären Zustand der Vorrichtung, derart zu steuern, dass die Kamera in mindestens zwei Positionen mindestens zwei Bilder aufnimmt. Diese Vorrichtung weist eine Recheneinrichtung auf, welche ausgebildet ist, basierend auf den mindestens zwei Bildern den Abstand der Vorrichtung zu auf den Bildern sichtbaren Objekten zu berechnen und auszugeben.

Aus US2019056749A1 ist ein Fahrassistenzsystem bekannt, dass eine Kamera und mindestens einen Prozessor umfasst. Die Kamera ist an einer Halterungsvorrichtung angeordnet, die drehbar mit einem Fahrzeug gekoppelt ist und die sich um eine von der Kamera beabstandete Drehachse dreht. Die Kamera ist dazu konfiguriert, sich zusammen mit der Montagevorrichtung von einem ersten Punkt zu einem zweiten Punkt zu drehen und ein externes Bild des Fahrzeugs an dem ersten Punkt und dem zweiten Punkt aufzunehmen. Der Prozessor ist dazu konfiguriert, die Kamera zu steuern, um ein erstes Bild an dem ersten Punkt und ein zweites Bild an dem zweiten Punkt aufzunehmen, ein Objekt um das Fahrzeug herum auf Grundlage des ersten Bilds und des zweiten Bilds zu erkennen und einen Abstand zwischen dem Objekt und dem Fahrzeug zu bestimmen.

Nachteilig ist somit, dass beispielsweise eine Detektion von an Boden liegenden Personen im Stillstand oder bei sehr niedrigen, nicht auflösbaren Geschwindigkeiten nicht möglich ist. Auch sonstige Objekte in der Fahrzeugumgebung können durch "Structure from Motion" nicht erkannt werden, wenn sich das Fahrzeug nicht oder nur sehr langsam bewegt. Damit kann im Stillstand keine räumliche Erfassung der Umgebung des Fahrzeuges bzw. eines Objektes mit lediglich einer Kamera erreicht werden, so dass weder eine automatisierte Klassifizierung von Objekten noch eine Ermittlung eines Abstandes ermöglicht wird.

Die Sicherheitsanforderungen an fahrerlose Flurfahrzeuge erfordern aber beispielsweise nach ISO 3691-4 die Detektion von am Boden liegenden Personen, so dass diese bereits vor der Abfahrt, d.h. im Stillstand oder bei sehr geringen Geschwindigkeiten, erkannt werden müssen. Auch an einer Ampel oder in einer Parksituation können keine Messungen des Abstandes oder Objektklassifizierungen oder die Ermittlung weiterer räumlicher Objekt-Informationen eines Objektes mit den bekannten Systemen erfolgen.

Aufgabe der Erfindung ist daher, ein Verfahren zum Ermitteln einer Objekt-Information eines Objektes anzugeben, mit dem auch im Stillstand des Fahrzeuges oder bei sehr geringen Geschwindigkeiten mit nur einer Kamera eine räumliche Betrachtung der Fahrzeugumgebung ermöglicht wird. Aufgabe ist weiterhin, eine Steuereinheit sowie ein Fahrzeug anzugeben.

Diese Aufgabe wird durch ein Verfahren, eine Steuereinheit sowie ein Fahrzeug gemäß den unabhängigen Ansprüchen gelöst. Die Unteransprüche geben bevorzugte Weiterbildungen an.

Demnach ist ein gattungsgemäßes Verfahren zum Ermitteln einer Objekt-Information zu einem Objekt in einer Umgebung eines Fahrzeuges vorgesehen, wobei das Fahrzeug mindestens eine Kamera aufweist, mit mindestens den folgenden Schritten:
- Erfassen der Umgebung mit der mindestens einen Kamera von einem ersten Standpunkt aus und in Abhängigkeit davon Erstellen eines ersten Bildes bestehend aus ersten Bildpunkten;
- Verändern des Standpunktes der mindestens einen Kamera;
- Erfassen der Umgebung mit der mindestens einen Kamera von einem zweiten Standpunkt aus und in Abhängigkeit davon Erstellen eines zweiten Bildes bestehend aus zweiten Bildpunkten, wobei sich der erste Standpunkt durch zwischenzeitliches Verändern des Standpunktes der Kamera von dem zweiten Standpunkt unterscheidet;
- Ermitteln einer Objekt-Information zu einem Objekt in der erfassten Umgebung durch:
   - Auswählen von mindestens einem ersten Bildpunkt in dem ersten Bild und mindestens einem zweiten Bildpunkt in dem zweiten Bild, wobei der erste Bildpunkt und der zweite Bildpunkt derartig ausgewählt werden, dass diese demselben Objektpunkt des Objektes in der erfassten Umgebung zugeordnet sind, und
   - Bestimmen von Objektkoordinaten des zugeordneten Objektpunktes aus ersten Bildkoordinaten des mindestens einen ersten Bildpunktes und zweiten Bildkoordinaten des mindestens einen zweiten Bildpunktes durch Triangulation unter Annahme einer Basislänge zwischen den beiden Standpunkten der Kamera.

Erfindungsgemäß ist dabei vorgesehen, dass die Veränderung des Standpunktes der mindestens einen Kamera von dem ersten Standpunkt zu dem zweiten Standpunkt durch Ansteuern eines aktiven Aktoriksystems in dem Fahrzeug bewirkt wird, wobei das aktive Aktoriksystem die mindestens eine Kamera um einen Verstellweg verstellt, ohne dabei einen Fahrzustand des Fahrzeuges zu verändern. Unter Fahrzustand wird dabei der Bewegungszustand des Fahrzeuges in seiner Gesamtheit verstanden, das heißt zum Beispiel der Stillstand oder eine Fahrt mit einer bestimmten Fahrzeug-Geschwindigkeit. Das aktive Aktoriksystem verändert diese Bewegung nicht, der Verstellweg ist also nicht mit der Fahrt-Bewegung des Fahrzeuges verknüpft, so dass sich das aktive Aktoriksystem von einem Antriebssystem oder einem Bremssystem unterscheidet, die auf den Bewegungszustand der Gesamtheit des Fahrzeuges unmittelbar einwirken.

Vorteilhafterweise wird durch das erfindungsgemäße Verfahren also erreicht, dass sich mit lediglich einer Kamera unabhängig von dem Fahrzustand des Fahrzeuges auch eine Tiefeninformation bzw. Objekt-Information ermitteln lässt. Dadurch kann auch im Stillstand oder wenn die Fahrzeug-Geschwindigkeit so gering ist, dass aus Odometrie-Daten keine zuverlässige Aussage über die Bewegung zwischen den beiden Standpunkten getroffen werden kann durch Triangulation die Tiefeninformation bzw. in einer Näherung die 3D-Position bzw. die Objektkoordinaten des jeweiligen Objektpunktes ermittelt werden. Dazu ist lediglich eine kontrollierte Ansteuerung des aktiven Aktoriksystems nötig, was unabhängig von der Fahrzeugbewegung ist. Durch Triangulation kann dann zunächst unter Annahme einer bestimmten Basislänge, auch ohne deren genaue Kenntnis, zumindest eine rudimentäre Tiefeninformation gewonnen werden, beispielsweise eine Objektform oder eine Objektkontur.

Damit ist das Aktoriksystem zur Verstellung der Kamera zwischen den Standpunkten auch nicht nur auf den Stillstand oder niedrige Geschwindigkeiten des Fahrzeuges begrenzt. So kann auch während der Fahrt über das aktive Aktoriksystem eine zusätzliche Verstellung um den Verstellweg erfolgen. Dadurch kann die Ermittlung der Objekt-Information flexibler bzw. in unterschiedlichen Fahrzuständen bzw. Fahrsituationen erfolgen.

Vorzugsweise ist weiterhin vorgesehen, dass die Basislänge zwischen den beiden Standpunkten aus Odometrie-Daten des Fahrzeuges ermittelt wird, wobei die Odometrie-Daten zumindest abhängig von dem Verstellweg erzeugt werden und die Odometrie-Daten eine Verstellung der Kamera zwischen den beiden Standpunkten charakterisieren. Demnach wird die Basislänge nicht mehr nur angenommen, sondern in Abhängigkeit des aktiv eingesteuerten Verstellweges ermittelt, wodurch die Triangulation exakter wird. Der Verstellweg kann dabei ergänzend zu der Fahrzeugbewegung (insofern vorhanden) bei der Ermittlung der Tiefeninformation bzw. der Objektkoordinaten herangezogen werden, wenn dieser Verstellweg neben den üblichen Odometrie-Daten, die den Fahrzustand des Fahrzeuges betreffen, berücksichtigt wird. Dadurch kann die Ermittlung der Objekt-Information bzw. Tiefeninformation exakter und flexibler bzw. in unterschiedlichen Fahrsituationen erfolgen.

Vorzugsweise ist weiterhin vorgesehen, dass als aktives Aktoriksystem ein Kamera-Verstellsystem angesteuert wird, das Stellmotoren und/oder Pneumatikzylinder und/oder Hydraulikzylinder und/oder elektrischen Servozylinder aufweist, wobei die mindestens eine Kamera unmittelbar an dem Kamera-Verstellsystem befestigt ist, so dass die mindestens eine Kamera bei einer Ansteuerung des Kamera-Verstellsystems um den Verstellweg verstellt wird zum Verändern des Standpunktes der mindestens einen Kamera. Damit kann die Kamera gemäß einer Ausführungsform unmittelbar verstellt werden, ohne dabei das Fahrzeug oder Bestandteile des Fahrzeuges mit zu bewegen, wobei das Kamera-Verstellsystem dann entsprechend am Fahrzeug montiert und ausgerichtet ist.

Vorzugsweise ist weiterhin vorgesehen, dass als aktives Aktoriksystem ein aktives Luftfedersystem mit Luftfedern (ECAS) oder ein Fahrwerk-Verstellsystem angesteuert wird, wobei durch eine Ansteuerung des aktiven Luftfedersystems oder des Fahrwerk-Verstellsystems ein Fahrzeugaufbau in seiner Höhe um den Verstellweg verstellt wird, so dass die an dem Fahrzeugaufbau befestigte mindestens eine Kamera mittelbar um den Verstellweg verstellt wird zum Verändern des Standpunktes der mindestens einen Kamera.

Damit kann vorteilhafterweise auf ein Aktoriksystem zurückgegriffen werden, das im Fahrzeug bereits vorhanden ist und somit eine Doppelfunktion erfüllen kann, d.h. beispielsweise ein Anheben und Absenken des Fahrzeugaufbaus zur Luftfederung, Stabilisierung (Wanken, Kippen), etc., bewirken kann und daneben auch die Kamera gezielt in die unterschiedlichen Standpunkte verstellen kann. Das Luftfedersystem bzw. Fahrwerk-Verstellsystem ist dazu lediglich in der entsprechenden Situation anzusteuern, wobei dies in allen Fahrsituationen, insbesondere auch im Stillstand möglich ist. Die Kamera kann in dem Fall frei am Fahrzeugaufbau montiert werden, um sich mit diesem mit zu bewegen.

Vorzugsweise ist weiterhin vorgesehen, dass als aktives Aktoriksystem ein Komponenten-Verstellsystem angesteuert wird, wobei durch eine Ansteuerung des Komponenten-Verstellsystems eine Komponente des Fahrzeuges, beispielsweise ein Führerhaus und/oder eine Aerodynamik-Komponente, um den Verstellweg verstellt wird, so dass die an dieser Kom-ponente befestigte mindestens eine Kamera mittelbar um den Verstellweg verstellt wird zum Verändern des Standpunktes der mindestens einen Kamera.

Damit kann auf ein Aktoriksystem zurückgriffen werden, das nicht den gesamten Fahrzeugaufbau anhebt und absenkt bzw. verstellt, sondern nur einzelne Bestandteile bzw. Komponenten. Derartige Verstellsysteme sind in bestimmten Fahrzeugen bereits vorhanden, so dass diese nicht nachzurüsten sind. Die Kamera ist dann lediglich an dieser Komponente zu befestigen.

Die genannten aktiven Aktoriksysteme können dabei einzeln oder in Kombination miteinander vorgesehen sein, um beispielsweise die Variablität zu erhöhen und kombinierte Verstellungen mit ggf. erweiterten Verstellwegen zu ermöglichen.

Vorzugsweise ist weiterhin vorgesehen, dass sich das Fahrzeug bei einem Ansteuern des aktiven Aktoriksystems in einem Fahrzustand befindet, in dem das Fahrzeug eine Fahrzeug-Geschwindigkeit aufweist, die geringer als eine Grenz-Geschwindigkeit ist, oder sich das Fahrzeug im Stillstand befindet. Damit eignet sich das Verfahren vorteilhafterweise auch für Situationen, in denen eine herkömmliche Odometrie über bereitgestellte Odometrie-Daten, beispielsweise Raddrehzahl-Signale, Knickwinkel, Lenkwinkel, etc. nicht zu einer zuverlässigen Ermittlung der Tiefeninformationen des Objektes herangezogen werden können, da diese zu ungenau sind. Durch die aktive Verstellung der Kamera gemäß der Erfindung ist das Verfahren vielmehr unabhängig von der Fahrtbewegung des Fahrzeuges.

Vorzugsweise ist weiterhin vorgesehen, dass die Objektkoordinaten bzw. die Objekt-Information für mehrere Objektpunkte durch Triangulation aus den mindestens zwei Bildern ermittelt wird und aus den mehreren Objektpunkten eine Objektkontur und/oder eine Objektform ermittelt wird. Das Objekt kann dabei vorzugsweise anhand der Objektkontur und/oder der Objektform in Objektklassen unterteilt werden. Dies ermöglicht in einfacher Weise auch im Stillstand das Erkennen und Klassifizieren von Objekten, insbesondere auch stillstehende Objekte, z.B. Personen.

Gemäß einer weiteren Ausbildung ist vorgesehen, dass mehrere Kameras vorgesehen sind und mithilfe jeder Kamera durch Verstellung um den Verstellweg unabhängig voneinander Objekt-Informationen zu einem Objekt nach dem beschriebenen Verfahren aus der Disparität bzw. der Basislänge ermittelt werden. Dadurch lässt sich die Tiefeninformation bzw. Objekt-Information vorzugsweise aus mehreren Quellen ermitteln, wodurch die Zuverlässigkeit erhöht wird. Weiterhin wird dadurch auch ermöglicht, die von den mehreren Kameras ermittelten Objekt-Information zu plausibilisieren.

Vorzugsweise ist weiterhin vorgesehen, dass mehr als zwei Bilder an unterschiedlichen Standpunkten aufgenommen werden und aus jedem aufgenommenen Bild Bildpunkte ausgewählt werden, die demselben Objekt-punkt des Objektes in der erfassten Umgebung zugeordnet sind, wobei aus den Bildkoordinaten der ausgewählten Bildpunkte durch Triangulation Objektkoordinaten des zugeordneten Objektpunktes unter Annahme einer Basislänge zwischen den jeweiligen Standpunkten der Kamera ermittelt werden. Demnach kann das jeweilige Objekt bzw. der jeweilige Objektpunkt auch zeitlich länger verfolgt werden, um daraus, ggf. durch Bündelausgleich, die Tiefeninformationen bzw. die jeweiligen Objekt-Informationen genauer bzw. robuster zu ermitteln. Dabei können auch mehrere Bildpunkte zu einem oder mehreren Merkmalspunkten zusammengefasst werden und die zeitliche Korrespondenz dieses bzw. dieser Merkmalspunkte(s) zwischen den jeweiligen Bildern durch Triangulation ermittelt werden.

Ergänzend kann vorgesehen sein, dass die ermittelten Objekt-Informationen, die aus einer Verstellung der Kamera um den Verstellweg durch das aktive Aktoriksystem bzw. aus dem Verstellweg als Odometrie-Daten folgen, mit Objekt-Informationen plausibilisiert werden, die aus Odometrie-Daten des Fahrzeuges folgen, die ausgewählt sind aus der Gruppe bestehend aus: Raddrehzahl-Signal und/oder Fahrzeug-Geschwindigkeit und/oder Lenkwinkel und/oder Knickwinkel. Damit können aus unterschiedlichen Bewegungen der Kamera ermittelte Objekt-Informationen zu einem Objekt verglichen werden. Ist beispielsweise die Fahrzeug-Geschwindigkeit sehr gering, so kann die Zuverlässigkeit einer aus Raddrehzahlen ermittelten Tiefeninformation nicht mehr sichergestellt werden, beispielsweise bei passiven Raddrehzahlsensoren, so dass ergänzend zur Plausibilisierung die Kamera über das aktive Aktoriksystem um den Verstellweg verstellt werden und daraus die Tiefeninformation gewonnen werden kann.

Erfindungsgemäß ist weiterhin eine Steuereinheit und ein Fahrzeug mit einer derartigen Steuereinheit zur Durchführung der beschriebenen Verfahren vorgesehen, wobei das Fahrzeug einteilig oder mehrteilig ist und die mindestens eine Kamera an einem Zugfahrzeug (mit oder ohne Anhänger) und/oder an einem Anhänger des Fahrzeuges angeordnet ist.

Die Erfindung wird im Folgenden anhand eines Ausführungsbeispiels näher erläutert. Es zeigen:
- Fig. 1: eine Fahrsituation eines mehrteiligen Fahrzeuges;
- Fig. 1a: eine Detailansicht des mehrteiligen Fahrzeuges;
- Fig. 2a: ein von der Kamera aufgenommenes Bild;
- Fig. 2b: die Aufnahme eines Objektpunktes mit einer Kamera aus unterschiedlichen Standpunkten; und
- Fig. 3: ein Flussdiagramm des erfindungsgemäßen Verfahrens.

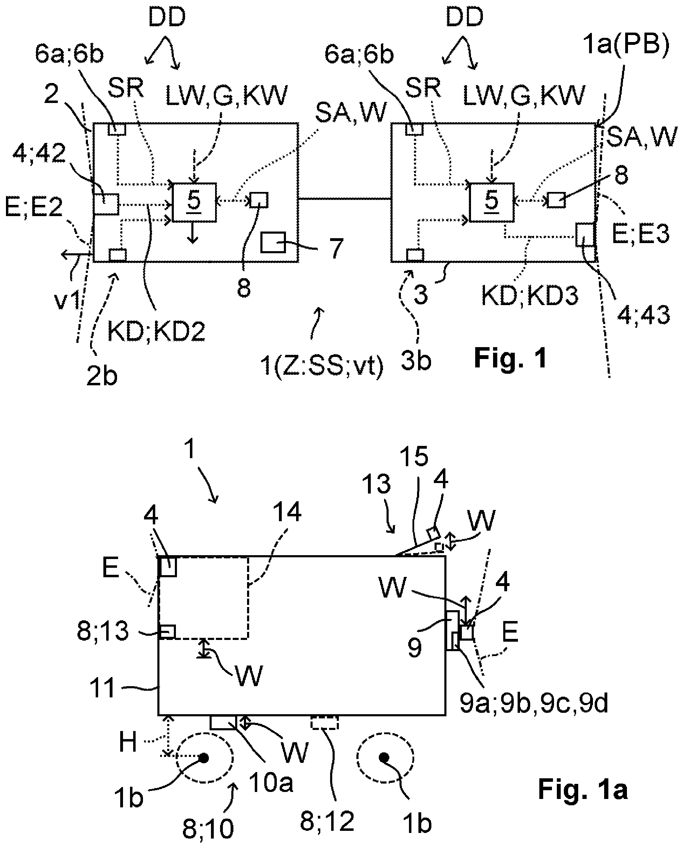

In Figur 1 ist schematisch ein mehrteiliges Fahrzeug 1 aus einem Zugfahrzeug 2 und einem Anhänger 3 dargestellt, wobei gemäß der gezeigten Ausführungsform an beiden Fahrzeugteilen 2, 3 jeweils eine Kamera 4 mit einem Erfassungsbereich E angeordnet ist. An dem Zugfahrzeug 2 ist eine Zugfahrzeug-Kamera 42 mit einem Zugfahrzeug-Erfassungsbereich E2 und an dem Anhänger 3 eine Anhänger-Kamera 43 mit einem Anhänger-Erfassungsbereich E3 angeordnet. Die Kameras 4, 42, 43 geben jeweils Kamera-Daten KD, KD2, KD3 aus.

Das Fahrzeug 1 kann hierbei mehrteilig ausgeführt sein, wie in Fig. 1 abgebildet, beispielsweise als Lastzug mit Lastkraftwagen und Deichselanhänger bzw. Drehschemelanhänger oder als Sattelzug mit Sattelzugmaschine und Sattelauflieger. Grundsätzlich kann das Fahrzeug 1 aber auch nur einteilig sein, wie in Fig. 1a abgebildet. Die Ausrichtung der Kamera 4 wird in Abhängigkeit der jeweiligen Anwendung gewählt.

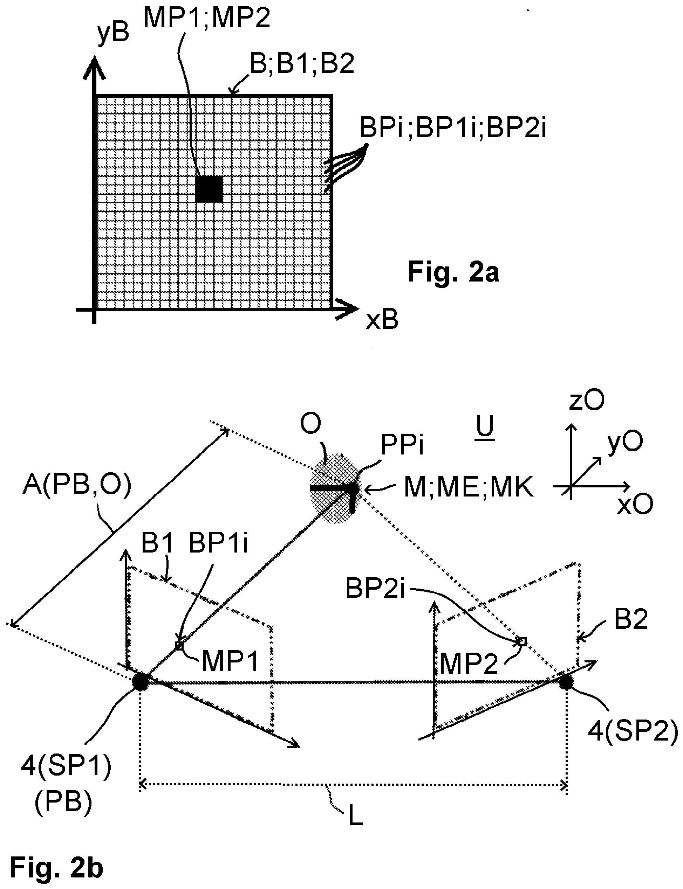

Die jeweiligen Kamera-Daten KD, KD2, KD3 werden in Abhängigkeit einer Umgebung U um das Fahrzeug 1 erzeugt, auf die der jeweilige Erfassungsbereich E, E2, E3 ausgerichtet ist. Aus den Kamera-Daten KD, KD2, KD3 lässt sich jeweils ein Bild B aus Bildpunkten BPi mit Bildkoordinaten xB, yB (s. Fig. 2a) erstellen, wobei jedem Bildpunkt BPi ein Objektpunkt PPi in der Umgebung U zugeordnet ist (s. Fig. 2b). Die Objektpunkte PPi gehören dabei zu Objekten O, die sich in der Umgebung U befinden und denen bestimmte absolute Objektkoordinaten xO, yO, zO im Raum zugeordnet werden können. Je nach Standpunkt SP der jeweiligen Kamera 4, 42, 43 werden Objektpunkte PPi eines Objektes O auf unterschiedlichen Bildpunkten BPi bzw. mit unterschiedlichen Bildkoordinaten xB, yB in den Bildern B abgebildet.

Die Kamera-Daten KD, KD2, KD3 der jeweiligen Kamera 4, 42, 43 werden an eine Steuereinheit 5 übermittelt, die ausgebildet ist, in Abhängigkeit der Kamera-Daten KD, KD2, KD3 sowie in Abhängigkeit von ausgewählten Odometrie-Daten DD des Fahrzeuges 1, die die aktuelle Fahrsituation des Fahrzeuges 1 bzw. der Teilfahrzeuge 2, 3 betreffen und damit auch die Bewegung der Kamera 4 charakterisieren, Objekt-Informationen OI durch eine dem Fachmann allgemeine bekannte Triangulation T zu ermitteln. Die Objekt-Informationen OI geben dabei insbesondere räumliche Merkmale des jeweiligen von den Kameras 4, 42, 43 erfassten Objektes O in der Umgebung U an.

Als Objekt-Informationen OI kommen dazu beispielsweise
- die absoluten Objektkoordinaten xO, yO, zO (Weltkoordinaten) des Objektes O im Raum, und/oder
- ein Abstand A zwischen einem Bezugspunkt PB, beispielsweise einer Rückseite 1a des Fahrzeuges 1 (bei einem einteiligen Fahrzeug 1) bzw. des Anhängers 3 (bei einem mehrteiligen Fahrzeug 1) oder einem aktuellen Standpunkt SP der jeweiligen Kamera 4, 42, 43, und dem erkannten Objekt O bzw. einem Objektpunkt PPi auf dem Objekt O bzw. eine damit zusammenhängende Größe, und/oder
- eine Objektform OF bzw. eine Objektkontur OC, die beispielsweise in n unterschiedliche Objektklassen OKn unterteilt ist, und/oder
- eine Objektdynamik OD, d.h. eine zeitliche Bewegung des erfassten Objektes O im Raum, in Frage.

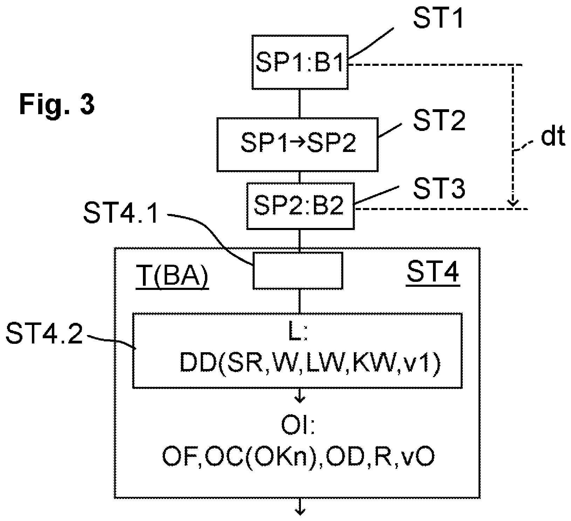

Die Objekt-Informationen OI werden hierbei gemäß dem Structure-From-Motion (SfM) Verfahren ermittelt, bei dem in Teilschritten ST1, ST2, ST3 (s. Fig. 3) ein Objekt O von einer Kamera 4 von mindestens zwei unterschiedlichen Standpunkten SP1, SP2 aus aufgenommen wird (s. Fig. 2b). Durch Triangulation T können in einem weiteren Schritt ST4 Tiefeninformationen bezüglich des Objektes O bzw. die jeweiligen Objekt-Informationen OI gewonnen werden. Wie zu Fig. 2b beschrieben, werden dabei Bildkoordinaten xB, yB zu mindestens einem ersten Bildpunkt BP1i im ersten Bild B1 und zu mindestens einem zweiten Bildpunkt BP2i im zweiten Bild B2 bestimmt, die jeweils demselben Objektpunkt PPi zugeordnet sind (ST4.1).

Um den Prozess zu vereinfachen, können eine gewisse Anzahl an Bildpunkten BP1i, BP2i im jeweiligen Bild B1, B2 in einem Merkmalspunkt MP1, MP2 zusammengefasst werden (s. Fig. 2a), wobei die zusammenzufassenden Bildpunkte BP1i, BP2i derartig gewählt werden, dass der jeweilige Merkmalspunkt MP1, MP2 einem bestimmten eindeutig lokalisierbaren Merkmal M an dem Objekt O zugeordnet ist (s. Fig. 2b). Bei dem Merkmal M kann es sich beispielsweise um eine Ecke ME oder eine Kante MK am Objekt O handeln, die aus den gesamten Bildern B1, B2 jeweils extrahiert und deren Bildpunkte BP1i, BP2i in den Merkmalspunkten MP1, MP2 zusammengefasst werden können.

In einer Näherung kann aus den Bildkoordinaten xB, yB der einzelnen Bildpunkte BP1i, BP2i bzw. der Merkmalspunkte MP1, MP2, die in den mindestens zwei Bildern B1, B2 dem- oder denselben Objektpunkten PPi bzw. Merkmal M zugeordnet sind, durch Triangulation T eine Objektform OF oder eine Objektkontur OC zumindest abgeschätzt werden. Dazu können die Bildkoordinaten xB, yB mehrerer Bildpunkte BP1i, BP2i bzw. mehrerer Merkmalspunkte MP1, MP2 einer Triangulation T unterzogen werden, um Objektkoordinaten xO, yO, zO zu erhalten, die jedoch nicht zwangsläufig auf dem Objekt O im Raum liegen.

Ohne die Kenntnis einer exakten Basislänge L, d.h. einem Abstand zwischen den unterschiedlichen Standpunkten SP1, SP2 der Kamera 4, ergeben sich durch die Triangulation T nämlich Objektkoordinaten xO, yO, zO in unskalierter Form. Damit lässt sich aus derartig ermittelten Objektkoordinaten xO, yO, zO auch lediglich eine unskalierte Objektform OF bzw. Objektkontur OC herleiten, was aber für die Ermittlung der Form bzw. der Kontur ausreichend ist. Für die Triangulation T kann dabei zunächst eine beliebige Basislänge L angenommen werden.

Um durch Triangulation T eine Ermittlung von den weiteren o.g. Objekt-Informationen OI zu ermöglichen, wird ergänzend die tatsächliche Basislänge L herangezogen. Sind gemäß Fig. 2b die relativen Positionen und damit die Basislänge L zwischen den unterschiedlichen Standpunkten SP1, SP2 der Kamera 4, an denen die beiden Bilder B1, B2 aufgenommen wurden, bekannt bzw. wurden diese ermittelt, so können durch Triangulation T auch die absoluten Objektkoordinaten xO, yO, zO (Weltkoordinaten) des Objektes O bzw. des Objektpunkts PPi bzw. des Merkmals M ermittelt werden. Daraus kann wiederum der Abstand A zwischen dem Bezugspunkt PB und dem erkannten Objekt O bzw. einem Objektpunkt PPi auf dem Objekt O ermittelt werden, wobei die Koordinaten des Bezugspunktes PB in den Weltkoordinaten unmittelbar aus geometrischen Betrachtungen folgen.

Auf diese Weise kann von der Steuereinrichtung 5 eine gegenüber dem obigen Fall skalierte Objektkontur OC bzw. skalierte Objektform PF abgeschätzt werden, wenn die exakten Objektkoordinaten xO, yO, zO von mehreren Objektpunkten PPi bzw. Merkmalen M ermittelt wird. Aus der Objektkontur OC wiederum kann eine Klassifizierung des Objektes O in eine bestimmte Objektklasse OKn erfolgen. Dabei kann auch die Objektdynamik OD berücksichtigt werden, beispielsweise eine Bewegungsrichtung R des oder der Objektpunkte PPi und/oder eine Objekt-Geschwindigkeit vO, wenn die Objekt-punkte PPi zeitlich aufgelöst betrachtet werden.

Beispielsweise können als Personen erkannten Objekte O in einer ersten Objektklasse OK1 eingeordnet werden. In einer zweiten Objektklasse OK2 können als feststehend erkannte Objekte O, beispielsweise Schilder, Laderampen, Häuser, etc. eingeordnet werden. In eine dritte Objektklasse OK3 können als sich bewegend erkannte Objekte O, beispielsweise andere Fahrzeuge, eingeordnet werden.

Um die ermittelten Objekt-Informationen OI noch genauer zu ermitteln, kann ergänzend vorgesehen sein, dass mehr als zwei Bilder B1, B2 aufgenommen und durch Triangulation T wie oben beschrieben ausgewertet werden, und/oder ergänzend eine Bündelausgleichung BA durchgeführt wird.

Wie bereits beschrieben, ist das Objekt O für das SfM-Verfahren aus mindestens zwei unterschiedlichen Standpunkten SP1, SP2 von der Kamera 4 zu betrachten, wie schematisch in Fig. 2b dargestellt. Dazu ist die Kamera 4 in dem Teilschritt ST2 kontrolliert in die unterschiedlichen Standpunkte SP1, SP2 zu bringen und im skalierten Fall anhand von Odometrie-Daten DD zu ermitteln, welche Basislänge L sich zwischen den Standpunkten SP1, SP2 aus dieser Bewegung ergibt (ST4, ST4.2). Dazu können unterschiedliche Methoden zur Anwendung kommen:
Ist das gesamte Fahrzeug 1 in Bewegung, so ergibt sich bereits daraus eine Bewegung der Kamera 4. Darunter ist zu verstehen, dass das Fahrzeug 1 in seiner Gesamtheit aktiv, beispielsweise durch ein Antriebssystem 7, oder passiv, beispielsweise durch ein Gefälle, in Bewegung versetzt wird. Werden während dieser Bewegung von der Kamera 4 mindestens zwei Bilder B1, B2 innerhalb eines zeitlichen Versatzes dt aufgenommen, lässt sich mithilfe von Odometrie-Daten DD, aus denen sich die Fahrzeugbewegung und damit auch die Kamerabewegung ableiten lässt, die Basislänge L ermitteln. Durch Odometrie werden also die beiden den Bildern B1, B2 zugeordneten Standpunkte SP1, SP2 ermittelt.

Als Odometrie-Daten DD können beispielsweise Raddrehzahl-Signale SR von aktiven und/oder passiven Raddrehzahlsensoren 6a, 6p an den Rädern des Fahrzeuges 1 (s. Fig. 1) verwendet werden. Aus diesen kann in Abhängigkeit des zeitlichen Versatzes dt ermittelt werden, wie weit sich das Fahrzeug 1 bzw. die Kamera 4 zwischen den Standpunkten SP1, SP2 bewegt hat, woraus die Basislänge L folgt. Es ist aber nicht zwangsläufig nur auf die Fahrzeug-Odometrie zurückzugreifen, d.h. die Bewertung der Fahrzeugbewegung anhand von Bewegungssensoren am Fahrzeug 1. Ergänzend oder alternativ kann auch auf eine visuelle Odometrie zurückgegriffen werden. Bei der visuellen Odometrie kann aus den Kamera-Daten KD der Kamera 4 bzw. aus Informationen in den erfassten Bildern B; B1, B2 eine Kameraposition fortlaufend ermittelt werden, insofern zumindest zu Beginn z.B. Objektkoordinaten xO, yO, zO eines bestimmten Objektpunktes PPi bekannt sind. Die Odometrie-Daten DD können also auch eine Abhängigkeit von der derartig ermittelten Kameraposition enthalten, da daraus die Fahrzeugbewegung zwischen den beiden Standpunkten SP1, SP2 bzw. unmittelbar auch die Basislänge L abgeleitet werden kann.

Um die odometrische Bestimmung der Basislänge L bei einer Bewegung des Fahrzeuges 1 genauer zu machen, kann auf weitere im Fahrzeug 1 verfügbare Odometrie-Daten DD zurückgegriffen werden. Beispielsweise kann auf einen Lenkwinkel LW und/oder eine Gierrate G zurückgegriffen werden, um auch die Drehbewegung des Fahrzeuges 1 zu berücksichtigen. Bei einem zwei- oder mehrteiligen Fahrzeug 1 kann ergänzend auf einen Knickwinkel KW zwischen dem Zugfahrzeug 2 und dem Anhänger 3 zurückgegriffen werden, um die exakte Dynamik des Anhängers 3 zu berücksichtigen, insbesondere bei Rangiervorgängen.

Befindet sich das einteilige Fahrzeug 1 oder das mehrteilige Fahrzeug 1 mit seinen Fahrzeugteilen 2, 3 nicht in Bewegung oder ist die Bewegung innerhalb des zeitlichen Versatzes dt so gering, dass die Odometrie-Daten DD so ungenau sind, dass eine zuverlässige Ermittlung der Basislänge L damit nicht möglich ist, kann die Kamera 4 im Teilschritt ST2 auch durch ein aktives Aktoriksystem 8 in Bewegung versetzt werden. Die Bewegung der Kamera 4, die durch das Aktoriksystem 8 bewirkt wird, unterscheidet sich von der bisher betrachteten Bewegung des Fahrzeuges 1 insbesondere dadurch, dass durch das Aktoriksystem 8 lediglich die Kamera 4 oder ein mit der Kamera 4 verbundener Fahrzeugabschnitt in Bewegung versetzt wird. Die Bewegung des Fahrzeuges 1 in seiner Gesamtheit bzw. ein Fahrzustand Z des Fahrzeuges 1 werden dadurch also nicht verändert, so dass ein stillstehendes Fahrzeug 1 bei einer aktiven Ansteuerung des Aktoriksystems 8 weiterhin im Stillstand SS verbleibt.

Das Aktoriksystem 8 wird von der Steuereinheit 5 über Aktorik-Signale SA angesteuert. Dies kann beispielsweise dann geschehen, wenn die Steuereinheit 5 erkennt, dass die Odometrie-Daten DD, die die Bewegung des gesamten Fahrzeuges 1 charakterisieren, d.h. die Raddrehzahl-Signale SR und/oder der Lenkwinkel LW und/oder die Gierrate G und/oder die Kamera-Daten KD, nicht genau bzw. detailliert genug sind, um die Basislänge L zu ermitteln. Dies kann dann der Fall sein, wenn der Stillstand SS des Fahrzeuges 1 erkannt wurde oder eine Fahrzeug-Geschwindigkeit v1, die geringer ist als ein Geschwindigkeits-Grenzwert vt, vorliegt.

Bei einer Ansteuerung des Aktoriksystems 8 wird die Kamera 4 unmittelbar oder mittelbar bewegt und dadurch an unterschiedliche Standpunkte SP1, SP2 gebracht, so dass die Umgebung U in mindestens zwei unterschiedlichen Bildern B1, B2 abgebildet werden kann. Damit kann das SfM-Verfahren wie oben beschrieben ausgeführt werden. Um dabei die Basislänge L zu ermitteln, greift die Steuereinheit 5 auf einen Verstellweg W zurück, um den die Kamera 4 von dem Aktoriksystem 8 zwischen den beiden Standpunkten SP1, SP2 verstellt wird. Der Verstellweg W wird vom Aktoriksystem 8 an die Steuereinheit 5 übermittelt. Die Steuereinheit 5 kann den Verstellweg W der Aktorikeinheit 8 also ergänzend in den Odometrie-Daten DD berücksichtigen, um die Basislänge L zu ermitteln.

Als Aktoriksysteme 8 kommen unterschiedliche Systeme im Fahrzeug 1 in Betracht, die in Fig. 1a beispielhaft schematisch für ein einteiliges Fahrzeug 1 dargestellt sind, die aber an Teilfahrzeugen 2, 3 von mehrteiligen Fahrzeugen 1 ebenso zum Einsatz kommen können. Beispielsweise kann die Kamera 4 an einem Kamera-Verstellsystem 9 mit einem oder mehreren Stellmotor(en) 9a oder Pneumatikzylinder(n) 9b oder Hydraulikzylinder(n) 9c oder elektrischen Servozylinder(n) 9d oder vergleichbar wirkende Aktoren angeordnet sein, wobei das Kamera-Verstellsystem 9 so am Fahrzeug 1 befestigt ist, dass der Erfassungsbereich E wie gewünscht ausgerichtet ist. In dem Fall kann die Kamera 4 in die unterschiedlichen Standpunkte SP1, SP2 gebracht werden, indem der oder die Stellmotor(en) 9a, Pneumatikzylinder 9b, Hydraulikzylinder 9c, Servozylinder(n) 9d bei Betätigung um einen bestimmten Verstellweg W verstellt werden.

Eine weitere Möglichkeit für ein aktives Aktoriksystem 8 ist ein aktives Luftfedersystem 10 (ECAS, Electronically Controlled Air Suspension), das in einem einteiligen Fahrzeug 1 bzw. bei einem mehrteiligen Fahrzeug 1 in einem Zugfahrzeug 2 bzw. auch in einem Anhänger 3, über als Federbälge ausgeführte Luftfedern 10a dafür sorgt, dass ein Fahrzeugaufbau 11 gegenüber den Fahrzeugachsen 1b, 2b, 3b des Fahrzeuges 1 bzw. des Zugfahrzeuges 2 bzw. des Anhängers 3 in einer Höhe H verstellt, d.h. angehoben oder abgesenkt werden kann. Dazu kann ein Druck in den Luftfedern 10a gezielt angepasst werden. Dies kann dazu verwendet werden, eine optimale Federung unabhängig vom Straßenzustand oder vom Beladungszustand zu erreichen, eine Veränderung der Achslastverteilung dynamisch zu kompensieren, ein Wanken oder Nicken während einer Kurvenfahrt zu vermeiden oder die Höhe H des Fahrzeugaufbaus 11 bei einem Ankuppelvorgang eines Zugfahrzeuges 2 an einen Anhänger 3 sowie bei Be- und Entladevorgängen, beispielsweise an einer Laderampe, anzupassen.

Ist die jeweilige Kamera 4, 4a, 4b an dem Fahrzeugaufbau 11 des Fahrzeuges 1 bzw. des Zugfahrzeuges 2 bzw. des Anhängers 3 angeordnet, so kann durch eine gezielte Ansteuerung des aktiven Luftfedersystems 10 durch die Steuereinheit 5 eine Verstellung der Kamera 4 vorzugsweise in der Höhe H um einen Verstellweg W bewirkt werden, um diese an zwei unterschiedlichen Standpunkten SP1, SP2 zu positionieren. Da dem aktiven Luftfedersystem 10 der Verstellweg W bekannt ist und/oder dieser gemessen werden kann, kann dieser auch der Steuereinheit 5 übermittelt werden, so dass diese den von dem aktiven Luftfedersystem 10 bewirkten Verstellweg W in den Odometrie-Daten DD berücksichtigen kann, um die Basisläge L zu ermitteln.

Auf diese Weise kann die Steuereinheit 5 im Stillstand SS des Fahrzeuges 1 eine Verstellung der jeweiligen Kamera 4 über das aktive Luftfedersystem 10 anweisen, so dass auch darüber in einem SfM-Verfahren durch Triangulation T die jeweilige Objekt-Informationen OI zu mindestens einem Objektpunkt PPi ermittelt werden kann. Grundsätzlich kann die Steuereinheit 5 dabei auch bereits den Verstellweg W als Soll-Wert vorgeben, den das aktive Luftfedersystem 10 durch Veränderung des Druckes in den Luftfedern 10a einstellen soll. Um die Objektform OF oder die Objektkontur OC unskaliert durch Triangulation T zu ermitteln, kann der Verstellweg W (bzw. die Basislänge L) aber auch unberücksichtigt bleiben, beispielsweise wenn der Verstellweg W nicht gemessen wird oder werden kann.

Neben einem aktiven Luftfedersystem 10 kann als weiteres aktives Aktoriksystem 8 aber auch jedes vergleichbar wirkende aktive Fahrwerk-Verstellsystem 12 verwendet werden, das in der Lage ist, die Höhe H des Fahrzeugaufbaus 11 anzupassen und damit die daran angeordnete Kamera 4 gezielt an zwei unterschiedlichen Standpunkten SP1, SP2 zu positionieren. Als aktives Aktoriksystem 8 ist aber auch ein Komponenten-Verstellsystem 13 möglich, das lediglich einen Teil bzw. eine Komponente des Fahrzeugaufbaus 11, an dem die Kamera 4 befestigt ist, beispielsweise ein Führerhaus 14, um den Verstellweg W anheben oder absenken kann. Als weitere Komponenten kommen beispielsweise auch Aerodynamik-Komponenten 15, beispielsweise Aerodynamik-Flügel oder Spoiler in Betracht, an denen eine Kamera 4 montiert werden kann und die aktiv verstellt werden können, um die Kamera 4 um einen Verstellweg W gezielt zu verstellen.

Damit gibt es eine Reihe von Möglichkeiten, die Kamera 4 aktiv und gezielt an unterschiedlichen Standpunkten SP1, SP2 zu positionieren, um zwei Bilder B1, B2 von einem Objekt O aufzunehmen und daraus die jeweilige Objekt-Information OI (skaliert oder unskaliert) für ein oder mehrere Objekt-punkte PPi zu ermitteln.

### Bezugszeichenliste (Teil der Beschreibung)

- 1: Fahrzeug
- 1a: Rückseite des Fahrzeuges 1
- 1b: Fahrzeugachse des Fahrzeuges 1
- 2: Zugfahrzeug
- 2b: Fahrzeugachse des Zugfahrzeuges 2
- 3: Anhänger
- 3b: Fahrzeugachse des Anhängers 3
- 4: Kamera
- 42: Zugfahrzeug-Kamera
- 43: Anhänger-Kamera
- 5: Steuereinheit
- 6a: aktiver Raddrehzahlsensor
- 6p: passiver Raddrehzahlsensor
- 7: Antriebssystem
- 8: aktives Aktoriksystem
- 9: Kamera-Verstellsystem
- 9a: Stellmotor
- 9b: Pneumatikzylinder
- 9c: Hydraulikzylinder
- 9d: elektrischer Servozylinder
- 10: aktives Luftfedersystem (ECAS)
- 10a: Luftfedern
- 11: Fahrzeugaufbau
- 12: Fahrwerk-Verstellsystem
- 13: Komponenten-Verstellsystem
- 14: Führerhaus
- 15: Aerodynamik-Komponente
- A: Abstand
- B: Bild
- B1: erstes Bild
- B2: zweites Bild
- BA: Bündelausgleich
- BPi: Bildpunkte
- BP1i: erster Bildpunkt
- BP2i: zweiter Bildpunkt
- DD: Odometrie-Daten
- dt: zeitlicher Versatz
- E: Erfassungsbereich der Kamera
- E2: erster Erfassungsbereich der Zugfahrzeug-Kamera
- E3: zweiter Erfassungsbereich der Anhänger-Kamera
- G: Gierrate
- H: Höhe des Fahrzeugaufbaus
- KD: Kamera-Daten der Kamera
- KD2: erste Kamera-Daten der Zugfahrzeug-Kamera
- KD3: zweite Kamera-Daten der Anhänger-Kamera
- L: Basislänge
- LW: Lenkwinkel
- M: Merkmal
- MP1, MP2: Merkmalspunkt
- ME: Ecke (als Merkmal)
- MK: Kante (als Merkmal)
- O: Objekt
- OC: Objektkontur
- OD: Objektdynamik
- OF: Objektform
- OI: Objekt-Informationen
- OKn: n. Objektklasse
- PB: Bezugspunkt
- PPi: Objektpunkt
- R: Bewegungsrichtung
- SA: Aktorik-Signal
- SP: Standpunkt der Kamera 4
- SP1: erster Standpunkt der Kamera
- SP2: zweiter Standpunkt der Kamera
- SR: Raddrehzahl-Signale
- SS: Stillstand
- T: Triangulation
- U: Umgebung um das Fahrzeug 1
- v1: Fahrzeug-Geschwindigkeit
- vO: Objekt-Geschwindigkeit
- vt: Geschwindigkeits-Grenzwert
- W: Verstellweg
- Z: Fahrzustand

## Patentansprüche

1. Verfahren zum Ermitteln einer Objekt-Information (OI) eines Objektes (O) in einer Umgebung (U) eines Fahrzeuges (1), wobei das Fahrzeug (1) mindestens eine Kamera (4) aufweist, mit mindestens den folgenden Schritten:
- Erfassen der Umgebung (U) mit der mindestens einen Kamera (4) von einem ersten Standpunkt (SP1) aus und in Abhängigkeit davon Erstellen eines ersten Bildes (B1) bestehend aus ersten Bildpunkten (BP1i) (ST1);
- Verändern des Standpunktes (SP) der mindestens einen Kamera (4) (ST2);
- Erfassen der Umgebung (U) mit der mindestens einen Kamera (4) von einem zweiten Standpunkt (SP2) aus und in Abhängigkeit davon Erstellen eines zweiten Bildes (B2) bestehend aus zweiten Bildpunkten (BP2i) (ST3);
- Ermitteln einer Objekt-Informationen (OI) zu einem Objekt (O) in der erfassten Umgebung (U) (ST4) durch
- Auswählen von mindestens einem ersten Bildpunkt (BP1i) in dem ersten Bild (B1) und mindestens einem zweiten Bildpunkt (BP2i) in dem zweiten Bild (B2), wobei der erste Bildpunkt (BP1i) und der zweite Bildpunkt (BP2i) derartig ausgewählt werden, dass diese demselben Objektpunkt (PPi) des Objektes (O) in der erfassten Umgebung (U) zugeordnet sind (ST4.1), **gekennzeichnet durch** den weiteren Schritt,
- Bestimmen von Objektkoordinaten (xO, yO, zO) des zugeordneten Objektpunktes (Ppi) aus ersten Bildkoordinaten (xB, yB) des mindestens einen ersten Bildpunktes (BP1i) und zweiten Bildkoordinaten (xB, yB) des mindestens einen zweiten Bildpunktes (BP2i) durch Triangulation (T) unter Annahme einer Basislänge (L) zwischen den beiden Standpunkten (SP1, SP2) der Kamera (4),
wobei die Veränderung des Standpunktes (SP) der mindestens einen Kamera (4) (ST2) von dem ersten Standpunkt (SP1) zu dem zweiten Standpunkt (SP2) durch Ansteuern eines aktiven Aktoriksystems (8) in dem Fahrzeug (1) bewirkt wird, wobei das aktive Aktoriksystem (8) die mindestens eine Kamera (4) um einen Verstellweg (W) verstellt, ohne dabei einen Fahrzustand (Z) des Fahrzeuges (1) zu verändern, wobei als aktives Aktoriksystem (8) ein aktives Luftfedersystem (10) mit Luftfedern (10a) oder ein Fahrwerk-Verstellsystem (12) angesteuert wird, wobei durch eine Ansteuerung des aktiven Luftfedersystems (10) oder des Fahrwerk-Verstellsystems (12) ein Fahrzeugaufbau (11) in seiner Höhe (H) um den Verstellweg (W) verstellt wird, so dass die an dem Fahrzeugaufbau (11) befestigte mindestens eine Kamera (4) mittelbar um den Verstellweg (W) verstellt wird zum Verändern des Standpunktes (SP) der mindestens einen Kamera (4).

2. Verfahren nach Anspruch 1, **dadurch gekennzeichnet, dass** als aktives Aktoriksystem (8) ein Kamera-Verstellsystem (9) angesteuert wird, das Stellmotoren (9a) und/oder Pneumatikzylinder (9b) und/oder Hydraulikzylinder (9c) und/oder elektrische Servorzylinder (9d) aufweist, wobei die mindestens eine Kamera (4) unmittelbar an dem Kamera-Verstellsystem (9) befestigt ist, so dass die mindestens eine Kamera (4) bei einer Ansteuerung des Kamera-Verstellsystems (9) um den Verstellweg (W) verstellt wird zum Verändern des Standpunktes (SP) der mindestens eine Kamera (4).

3. Verfahren nach einem der vorhergehenden Ansprüche, **dadurch gekennzeichnet, dass** als aktives Aktoriksystem (8) ein Komponenten-Verstellsystem (13) angesteuert wird, wobei durch eine Ansteuerung des Komponenten-Verstellsystems (13) eine Komponente des Fahrzeuges (1), beispielsweise ein Führerhaus (14) und/oder eine Aerodynamik-Komponente (15), um den Verstellweg (W) verstellt wird, so dass die an dieser Komponente befestigte mindestens eine Kamera (4) mittelbar um den Verstellweg (W) verstellt wird zum Verändern des Standpunktes (SP) der mindestens eine Kamera (4).

4. Verfahren nach einem der vorhergehenden Ansprüche, **dadurch gekennzeichnet, dass** sich das Fahrzeug (1) bei einem Ansteuern des aktiven Aktoriksystems (8) in einem Fahrzustand (Z) befindet, in dem das Fahrzeug (1) eine Fahrzeug-Geschwindigkeit (v1) aufweist, die geringer als eine Grenz-Geschwindigkeit (vt) ist, oder sich das Fahrzeug im Stillstand (SS) befindet.

5. Verfahren nach einem der vorhergehenden Ansprüche, **dadurch gekennzeichnet, dass** die Objektkoordinaten (xO, yO, zO) für mehrere Objektpunkte (PPi) durch Triangulation (T) aus den mindestens zwei Bildern (B1, B2) ermittelt wird und aus den mehreren Objektpunkten (PPi) eine Objektkontur (OC) und/oder eine Objektform (OF) ermittelt wird.

6. Verfahren nach Anspruch 5, **dadurch gekennzeichnet, dass** das Objekt (O) anhand der Objektkontur (OC) und/oder der Objektform (OF) in Objektklassen (OKi) unterteilt wird.

7. Verfahren nach einem der vorhergehenden Ansprüche, **dadurch gekennzeichnet, dass** mehrere Kameras (4) vorgesehen sind und mithilfe jeder Kamera (4) durch Verstellung um den Verstellweg (W) unabhängig voneinander Objekt-Informationen (OI) zu einem Objekt (O) ermittelt werden.

8. Verfahren nach einem der vorhergehenden Ansprüche, **dadurch gekennzeichnet, dass** mehr als zwei Bilder (B) an unterschiedlichen Standpunkten (SP) aufgenommen werden und aus jedem aufgenommenen Bild (B) Bildpunkte (BPi) ausgewählt werden, die demselben Objektpunkt (PPi) des Objektes (O) in der erfassten Umgebung (U) zugeordnet sind, wobei aus den Bildkoordinaten (xB, yB) der ausgewählten Bildpunkte (BPi) durch Triangulation (T) Objektkoordinaten (xO, yO, zO) des zugeordneten Objektpunktes (PPi) unter Annahme einer Basislänge (L) zwischen den jeweiligen Standpunkten (SP) der Kamera (4) ermittelt werden.

9. Verfahren nach einem der vorherigen Ansprüche, **dadurch gekennzeichnet, dass** anhand der mindestens zwei aufgenommenen Bilder (B1, B2) ein Bündelausgleich (BA) durchgeführt wird.

10. Verfahren nach einem der vorhergehenden Ansprüche, **dadurch gekennzeichnet, dass** mehrere erste Bildpunkte (BP1i) in dem ersten Bild (B1) in einem ersten Merkmalspunkt (MP1) und mehrere zweite Bildpunkte (BP2i) in dem zweiten Bild (B2) zu einem zweiten Merkmalspunkt (MP2) zusammengefasst werden, wobei der erste Merkmalspunkt (MP1) und der zweite Merkmalspunkt (MP2) derartig ausgewählt werden, dass diese demselben Merkmal (M) des Objektes (O) in der erfassten Umgebung (U) zugeordnet sind,
wobei Objektkoordinaten (xO, yO, zO) des zugeordneten Merkmals (M) aus ersten Bildkoordinaten (xB, yB) des ersten Merkmalspunktes (MP1) und zweiten Bildkoordinaten (xB, yB) des zweiten Merkmalspunktes (MP2) durch Triangulation (T) unter Annahme einer Basislänge (L) zwischen den beiden Standpunkten (SP1, SP2) der Kamera (4) ermittelt werden.

11. Steuereinheit (5) zur Durchführung eines Verfahrens nach einem der vorhergehenden Ansprüche.

12. Fahrzeug (1) mit einer Steuereinheit (5) nach Anspruch 11, wobei das Fahrzeug (1) eine Kamera (4) aufweist und das Fahrzeug (1) einteilig oder mehrteilig ist und die mindestens eine Kamera (4) an einem Zugfahrzeug (2) und/oder einem Anhänger (3) des mehrteiligen Fahrzeuges (1) angeordnet ist.

## Claims

1. Method for ascertaining an object information item (OI) relating to an object (O) in an environment (U) of a vehicle (1), wherein the vehicle (1) has at least one camera (4), the method comprising at least the following steps:
- capturing the environment (U) from a first viewpoint (SP1) using the at least one camera (4) and, on the basis thereof, creating a first image (B1) consisting of first image points (BP1i) (ST1);
- changing the viewpoint (SP) of the at least one camera (4) (ST2);
- capturing the environment (U) from a second viewpoint (SP2) using the at least one camera (4) and, on the basis thereof, creating a second image (B2) consisting of second image points (BP2i) (ST3);
- ascertaining an object information item (OI) relating to an object (O) in the captured environment (U) (ST4) by
- selecting at least one first image point (BP1i) in the first image (B1) and at least one second image point (BP2i) in the second image (B2), wherein the first image point (BP1i) and the second image point (BP2i) are selected in such a way that they are assigned to the same object point (PPi) of the object (O) in the captured environment (U) (ST4.1), **characterized by** the further step of
- determining object coordinates (xO, yO, zO) of the assigned object point (Ppi) from first image coordinates (xB, yB) of the at least one first image point (BP1i) and second image coordinates (xB, yB) of the at least one second image point (BP2i) by triangulation (T) assuming a base length (L) between the two viewpoints (SP1, SP2) of the camera (4),
wherein the viewpoint (SP) of the at least one camera (4) is changed (ST2) from the first viewpoint (SP1) to the second viewpoint (SP2) by controlling an active actuator system (8) in the vehicle (1), wherein the active actuator system (8) adjusts the at least one camera (4) by an adjustment distance (W) without changing a driving state (Z) of the vehicle (1), wherein as the active actuator system (8) either an active pneumatic suspension system (10) with pneumatic springs (10a) or a chassis adjustment system (12) is controlled, wherein by controlling the active pneumatic suspension system (10) or the chassis adjustment system (12) a vehicle body (11) is adjusted with respect to its height (H) by the adjustment distance (W), with the result that the at least one camera (4) attached to the vehicle body (11) is indirectly adjusted by the adjustment distance (W) in order to change the viewpoint (SP) of the at least one camera (4).

2. Method according to claim 1, **characterized in that** as the active actuator system (8) a camera adjustment system (9) is controlled, which adjustment system has servomotors (9a) and/or pneumatic cylinders (9b) and/or hydraulic cylinders (9c) and/or electric servo cylinders (9d), wherein the at least one camera (4) is directly attached to the camera adjustment system (9), with the result that when the camera adjustment system (9) is controlled, the at least one camera (4) is adjusted by the adjustment distance (W) in order to change the viewpoint (SP) of the at least one camera (4).

3. Method according to either of the preceding claims, **characterized in that** as the active actuator system (8) a component adjustment system (13) is controlled, wherein by controlling the component adjustment system (13) a component of the vehicle (1), for example a driver's cab (14) and/or an aerodynamics component (15), is adjusted by the adjustment distance (W), with the result that the at least one camera (4) attached to this component is indirectly adjusted by the adjustment distance (W) in order to change the viewpoint (SP) of the at least one camera (4).

4. Method according to any of the preceding claims, **characterized in that** when the active actuator system (8) is controlled, the vehicle (1) is in a driving state (Z) in which the vehicle (1) has a vehicle speed (v1) lower than a limit speed (vt), or the vehicle is in a stationary state (SS).

5. Method according to any of the preceding claims, **characterized in that** the object coordinates (xO, yO, zO) are ascertained from the at least two images (B1, B2) for a plurality of object points (PPi) by triangulation (T) and an object contour (OC) and/or an object shape (OF) is ascertained from the plurality of object points (PPi).

6. Method according to claim 5, **characterized in that** the object (O) is classified into object classes (OKi) on the basis of the object contour (OC) and/or the object shape (OF).

7. Method according to any of the preceding claims, **characterized in that** a plurality of cameras (4) are provided and object information items (OI) relating to an object (O) are ascertained independently of each other using each camera (4) by adjusting it by the adjustment distance (W).

8. Method according to any of the preceding claims, **characterized in that** more than two images (B) are recorded at differing viewpoints (SP) and image points (BPi) that are assigned to the same object point (PPi) of the object (O) in the captured environment (U) are selected from each recorded image (B), wherein object coordinates (xO, yO, zO) of the assigned object point (PPi) are ascertained from the image coordinates (xB, yB) of the selected image points (BPi) by triangulation (T) assuming a base length (L) between the respective viewpoints (SP) of the camera (4).

9. Method according to any of the preceding claims, **characterized in that** a bundle adjustment (BA) is performed on the basis of the at least two recorded images (B1, B2).

10. Method according to any of the preceding claims, **characterized in that** a plurality of first image points (BP1i) in the first image (B1) are combined into a first feature point (MP1) and a plurality of second image points (BP2i) in the second image (B2) are combined to form a second feature point (MP2), wherein the first feature point (MP1) and the second feature point (MP2) are selected in such a way that they are assigned to the same feature (M) of the object (O) in the captured environment (U),
wherein object coordinates (xO, yO, zO) of the assigned feature (M) are ascertained from first image coordinates (xB, yB) of the first feature point (MP1) and second image coordinates (xB, yB) of the second feature point (MP2) by triangulation (T) assuming a base length (L) between the two viewpoints (SP1, SP2) of the camera (4).

11. Control unit (5) for performing a method according to any of the preceding claims.

12. Vehicle (1) comprising a control unit (5) according to claim 11, wherein the vehicle (1) has a camera (4) and the vehicle (1) is made of one or more parts and the at least one camera (4) is arranged on a towing vehicle (2) and/or a trailer (3) of the multi-part vehicle (1).

## Revendications

1. Procédé permettant de déterminer une information d'objet (OI) d'un objet (O) dans un environnement (U) d'un véhicule (1), dans lequel le véhicule (1) présente au moins une caméra (4), comportant au moins les étapes suivantes :
- détection de l'environnement (U) avec l'au moins une caméra (4) à partir d'un premier point de vue (SP1) et, en fonction de cela, création d'une première image (B1) constituée de premiers points d'image (BP1i) (ST1) ;
- modification du point de vue (SP) de l'au moins une caméra (4) (ST2) ;
- détection de l'environnement (U) avec l'au moins une caméra (4) à partir d'un second point de vue (SP2) et, en fonction de cela, création d'une seconde image (B2) constituée de seconds points d'image (BP2i) (ST3) ;
- détermination d'une information d'objet (OI) concernant un objet (O) dans l'environnement (U) détecté (ST4) par
- la sélection d'au moins un premier point d'image (BP1i) dans la première image (B1) et d'au moins un second point d'image (BP2i) dans la seconde image (B2), dans lequel le premier point d'image (BP1i) et le second point d'image (BP2i) sont sélectionnés de telle sorte qu'ils sont associés au même point d'objet (PPi) de l'objet (O) dans l'environnement (U) détecté (ST4.1),
**caractérisé par** l'étape supplémentaire consistant à
- établir des coordonnées d'objet (xO, yO, zO) du point d'objet (Ppi) associé à partir de premières coordonnées d'image (xB, yB) de l'au moins un premier point d'image (BP1i) et de secondes coordonnées d'image (xB, yB) de l'au moins un second point d'image (BP2i) par triangulation (T) en supposant une longueur de base (L) entre les deux points de vue (SP1, SP2) de la caméra (4),
dans lequel la modification du point de vue (SP) de l'au moins une caméra (4) (ST2) du premier point de vue (SP1) au second point de vue (SP2) est provoquée par la commande d'un système d'actionnement actif (8) dans le véhicule (1), dans lequel le système d'actionnement actif (8) règle l'au moins une caméra (4) sur une course de réglage (W), sans modifier pour autant un état de conduite (Z) du véhicule (1), dans lequel un système de suspension pneumatique actif (10) comportant des ressorts pneumatiques (10a) ou un système de réglage de châssis (12) est commandé en tant que système d'actionnement actif (8), dans lequel la hauteur (H) d'une carrosserie de véhicule (11) est réglée sur la course de réglage (W) par une commande du système de suspension pneumatique actif (10) ou du système de réglage de châssis (12), de sorte que l'au moins une caméra (4) fixée à la carrosserie de véhicule (11) est réglée indirectement sur la course de réglage (W) pour la modification du point de vue (SP) de l'au moins une caméra (4).

2. Procédé selon la revendication 1, **caractérisé en ce qu'**un système de réglage de caméra (9) est commandé en tant que système d'actionnement actif (8), lequel présente des servomoteurs (9a) et/ou des vérins pneumatiques (9b) et/ou des vérins hydrauliques (9c) et/ou des servovérins électriques (9d), dans lequel l'au moins une caméra (4) est fixée directement au système de réglage de caméra (9), de sorte que l'au moins une caméra (4) est réglée sur la course de réglage (W) lors d'une commande du système de réglage de caméra (9) pour la modification du point de vue (SP) de l'au moins une caméra (4).

3. Procédé selon l'une des revendications précédentes,
**caractérisé en ce qu'**un système de réglage de composant (13) est commandé en tant que système d'actionnement actif (8), dans lequel un composant du véhicule (1), par exemple une cabine de conduite (14) et/ou un composant aérodynamique (15), est réglé sur la course de réglage (W) par une commande du système de réglage de composant (13), de sorte que l'au moins une caméra (4) fixée audit composant est réglée indirectement sur la course de réglage (W) pour la modification du point de vue (SP) de l'au moins une caméra (4).

4. Procédé selon l'une des revendications précédentes,
**caractérisé en ce que,** lors d'une commande du système d'actionnement actif (8), le véhicule (1) se trouve dans un état de conduite (Z) dans lequel le véhicule (1) présente une vitesse de véhicule (v1) qui est inférieure à une vitesse limite (vt), ou le véhicule se trouve à l'arrêt (SS).

5. Procédé selon l'une des revendications précédentes,
**caractérisé en ce que** les coordonnées d'objet (xO, yO, zO) sont déterminées pour plusieurs points d'objet (PPi) par triangulation (T) à partir des au moins deux images (B1, B2) et un contour d'objet (OC) et/ou une forme d'objet (OF) sont déterminés à partir des points d'objet (PPi).

6. Procédé selon la revendication 5, **caractérisé en ce que** l'objet (O) est divisé en classes d'objets (OKi) à l'aide du contour d'objet (OC) et/ou de la forme d'objet (OF).

7. Procédé selon l'une des revendications précédentes, **caractérisé en ce que** plusieurs caméras (4) sont prévues et des informations d'objet (OI) concernant un objet (O) sont déterminées indépendamment les unes des autres à l'aide de chaque caméra (4) par le réglage sur la course de réglage (W).

8. Procédé selon l'une des revendications précédentes, **caractérisé en ce que** plus de deux images (B) sont prises au niveau de différents points de vue (SP) et, à partir de chaque image (B) prise, des points d'image (BPi) sont sélectionnés, lesquels sont associés au même point d'objet (PPi) de l'objet (O) dans l'environnement (U) détecté, dans lequel des coordonnées d'objet (xO, yO, zO) du point d'objet (PPi) associé sont déterminées à partir des coordonnées d'image (xB, yB) des points d'image (BPi) sélectionnés par triangulation (T) en supposant une longueur de base (L) entre les points de vue (SP) respectifs de la caméra (4).

9. Procédé selon l'une des revendications précédentes,
**caractérisé en ce qu'**une compensation de faisceau (BA) est réalisée à l'aide des au moins deux images (B1, B2) prises.

10. Procédé selon l'une des revendications précédentes,
**caractérisé en ce que** plusieurs premiers points d'image (BP1i) dans la première image (B1) sont regroupés en un premier point caractéristique (MP1) et plusieurs seconds points d'image (BP2i) dans la seconde image (B2) sont regroupés en un second point caractéristique (MP2), dans lequel le premier point
caractéristique (MP1) et le second point caractéristique (MP2) sont sélectionnés de telle sorte qu'ils sont associés à la même caractéristique (M) de l'objet (O) dans l'environnement (U) détecté,
dans lequel des coordonnées d'objet (xO, yO, zO) de la caractéristique (M) associée sont déterminées à partir de premières coordonnées d'image (xB, yB) du premier point caractéristique (MP1) et de secondes coordonnées d'image (xB, yB) du second point caractéristique (MP2) par triangulation (T) en supposant une longueur de base (L) entre les deux points de vue (SP1, SP2) de la caméra (4).

11. Unité de commande (5) pour la réalisation d'un procédé selon l'une des revendications précédentes.

12. Véhicule (1) comportant une unité de commande (5) selon la revendication 11, dans lequel le véhicule (1) présente une caméra (4) et le véhicule (1) est réalisé en une seule pièce ou en plusieurs pièces et l'au moins une caméra (4) est disposée sur un véhicule tracteur (2) et/ou sur une remorque (3) du véhicule (1) en plusieurs pièces.
